# EUROPÄISCHE PATENTSCHRIFT

(11) **EP 1 744 134 B1**
(45) Veröffentlichungstag und Bekanntmachung des Hinweises auf die Patenterteilung: **12.11.2008**
(21) Anmeldenummer: 06008242.7
(22) Anmeldetag: 21.04.2006
(51) Int. Cl.: G01K 1/14

(54) **Positionierhilfe für einen Garprozeßfühler**
Positioning aid for a cooking sensor
Dispositif d'aide pour positionner un sonde de cuisson

(30) Priorität: 16.07.2005 DE 202005011209 U
(43) Veröffentlichungstag der Anmeldung: 17.01.2007
(73) Patentinhaber: Rational AG, 86899 Landsberg/Lech (DE)
(72) Erfinder: Podestat, Helen, 79356 Eichstetten (DE); Egetenmeyer, Karin, 87648 Aitrang (DE)
(74) Vertreter: Weber-Bruls, Dorothée

(56) Entgegenhaltungen:
- DE-A1- 4 411 850
- DE-A1- 19 945 021
- US-A- 3 950 632

## Beschreibung

Die vorliegende Erfindung betrifft eine Positionierhilfe für einen Garprozeßfühler nach dem Oberbegriff von Anspruch 1 und eine Halteeinrichtung für solch eine Positionierhilfe.

Garprozeßfühler, wie sie insbesondere in der DE 199 45 021 C2 beschrieben sind, sind heutzutage von der modernen Großküche zur verläßlichen, reproduzierbaren und kontinuierlich durchführbaren Garprozeßsteuerung nicht mehr wegdenkbar. Für die Garprozeßsteuerung ist es dabei wesentlich, daß der Garprozeßfühler genau im Gargut positioniert ist, um so exakte Aussagen über den Garprozeß im Gargut treffen zu können. Insbesondere im Falle eines flüssigen oder viskosen Garguts ist es von Interesse, die Position des Garprozeßfühlers während eines Garprozesses zu kennen, wobei es die Garprozeßsteuerung erleichtert, wenn sich diese Position während des Garprozesses auch nicht ändert.

Eine gattungsgemäße Positionierhilfe ist aus der US 3,950,632 bekannt.

Bislang sind ferner einfache Klemmvorrichtungen zum Fixieren eines Garprozeßfühlers in Form eines Temperaturfühlers an einem offenen Rand eines Garbehälters, insbesondere in Form eines Kochtopfes oder Tiegels, bekannt. Hierzu ist beispielhaft auf die US 2,906,124 sowie die DE 30 45 143 A1 zu verweisen. Diese Klemmvorrichtungen haben jedoch den Nachteil, daß eine Veränderung der Position des Temperaturfühlers nicht ausschließbar ist, insbesondere wenn der Garbehälter zumindest zeitweise mit einem Deckel zu verschließen oder zu verkippen ist. Desweiteren besteht die Schwierigkeit, eine solche Klemmeinrichtung in Kombination mit einem Garkorb zu verwenden.

Es sind grundsätzlich Thermoelementanordnungen mit einem temperaturempfindlichen Thermoelement, einem das Thermoelement koaxial umgebenden steifen Mantel und einer Stützeinrichtung zwischen dem Thermoelement und dem Mantel, die eine Gleitbewegungen zwischen dem Thermoelement und dem Mantel ermöglicht, bekannt, ohne daß diese Thermoelementanordnungen bislang in der Gartechnologie eingesetzt werden. Eine solche Thermoelementanordnung ist beispielsweise in der DE 25 09 371 C2 beschrieben.

Aufgabe der vorliegenden Erfindung ist es daher, die gattungsgemäße Positionierhilfe für einen Garprozeßfühler derart weiterzuentwickeln, daß sie es ermöglicht, den Garprozeßfühler in flüssiges oder zähflüssiges Gargut einfach und jederzeit reproduzierbar zu setzen. Auch soll ein reproduzierbares Setzen eines Garprozeßfühlers in einen Garkorb möglich sein. Ferner soll ein Rückschluß auf die Füllhöhe eines Garbehälters mit flüssigem oder zähflüssigem Garmedium über die Plazierung des Garprozeßfühlers möglich sein.

Diese Aufgabe wird erfindungsgemäß dadurch gelöst, daß der Garprozeßfühler einen Griff zusätzlich zu seinem Schaft aufweist, wobei die Längsachse des Schafts mit der Längsachse der Positionierhilfe zusammenfällt.

Dabei sind bevorzugte Ausführungsformen der Erfindung gekennzeichnet durch ein steifes Gestell, das vorzugsweise zumindest bereichsweise aus einem gut wärmeleitenden und/oder magnetischen oder magnetisierbaren und/oder schweren Material hergestellt oder mit solch einem Material verbunden ist.

Ferner kann vorgesehen sein, daß die erste Fixiereinrichtung einen festen Sitz, insbesondere Preßsitz, des Schafts des Garprozeßfühlers in der Positionierhilfe, insbesondere in einer vorgegebenen Einstecktiefe, sicherstellt, vorzugsweise über eine Vielzahl von Stützringen oder Ösen.

Mit der Erfindung werden auch Ausführungsformen vorgeschlagen, die gekennzeichnet sind durch eine erste Halteeinrichtung, vorzugsweise umfassend zumindest einen Haken und/oder bereitgestellt durch das Gestell, zum Halten der Positionierhilfe in einer festen Position relativ zu einem Garbehälter, insbesondere in Form eines Garkorbs, einer Garraumwand oder einer Tiegelwand.

Nach der Erfindung kann auch vorgesehen sein, daß das Gestell einen Außenquader darbietet, der konzentrisch zu seiner Längsachse die Vielzahl von Stützringen oder Ösen trägt.

Ferner wird erfindungsgemäß vorgeschlagen, daß das Gestell eine Vielzahl von gerade verlaufenden Abschnitten, wie in Form von Stangen, umfaßt, von denen jeder entweder eine Außenkante der Positionierhilfe definiert oder eine Verbindung zwischen der ersten Fixiereinrichtung und einer besagten Außenkanten sicherstellt.

Erfindungsgemäß kann auch vorgesehen sein, daß die erste Fixiereinrichtung an den Schaft bereichsweise angreift, ohne in Kontakt mit einer Meßstelle auf dem Schaft zu kommen.

Mit der Erfindung wird weiterhin vorgeschlagen, daß die erste Halteeinrichtung durch eine Öffnung in der Positionierhilfe bereitgestellt ist, vorzugsweise durch ein freies Ende eines Abschnitts des Gestells, insbesondere eines eine Außenkante des Gestells definierenden Abschnitts.

Auch können Ausführungsformen der Erfindung gekennzeichnet sein durch eine zweite Halteeinrichtung, die vorzugsweise in einem mit der ersten Halteeinrichtung ausgeformt ist, zum Eingriff in eine dritte, mit einem Garbehälter, wie einem Garkorb, einer Garraumwand oder einer Tiegelwand in Verbindung stehenden Halteeinrichtung.

Ferner wird mit der Erfindung eine dritte Halteeinrichtung zum Halten einer erfindungsgemäßen Positionierhilfe an einem Garbehälter, wie einem Garkorb, einer Garraumwand oder einer Tiegelwand geliefert, die sich am oberen Rand eines Tiegels, insbesondere Innentiegels, abstützt, vorzugsweise auf den oberen Rand aufgesteckt oder angeklemmt ist.

Dabei können erfindungsgemäße dritte Halteeinrichtungen gekennzeichnet sein durch zumindest ein erstes Federelement, über das der Garprozeßfühler auf den Boden des Tiegels, insbesondere Innentiegels, drückbar ist, wobei das erste Federelement vorzugsweise an den Schaft und/oder den Griff des Garprozeßfühlers angreift.

Ausführungsformen erfindungsgemäßer dritter Halteeinrichtungen können ferner gekennzeichnet sein durch zumindest eine zweite Fixiereinrichtung zum Fixieren der Position des Garprozeßfühlers und/oder der Positionierhilfe relativ zum Garbehälter, der Garraumwand oder der Tiegelwand, vorzugsweise derart, daß die Positionierhilfe mit einer ersten Fläche auf dem Tiegelboden und/oder einer zweiten Fläche an einer Tiegelwand anliegt und/oder das freie Ende des Schafts des Garprozeßfühlers auf dem Tiegelboden aufliegt, wobei die zweite Fixiereinrichtung vorzugsweise an den Griff des Garprozeßfühlers angreift.

Der Erfindung liegt somit die überraschende Erkenntnis zugrunde, daß ein Garprozeßfühler mit einem Schaft und einem Griff, der vorzugsweise eine Vielzahl von Meßstellen längs seines Schafts darbietet, derart von einem beispielsweise quaderförmigen Gestell insbesondere aus Draht umgeben sein kann, daß der Abstand jeder Meßstellen beispielsweise zu dem Boden eines Garbehälters, wie einem Tiegelboden, oder zu der Wand eines Garbehälters, wie einer Tiegelwand, gleich ist, da unabhängig von der Auflage des quaderförmigen Gestells auf dem Tiegelboden und/oder der Anlage des quaderförmigen Gestells an der Tiegelwand besagter Abstand gleich bleibt, solange die Längsachse des Schafts mit der Längsachse des Quaders zusammenfällt. Zudem kann das Gestell aus schwerem oder magnetischem Material bestehen, und ggf. kann ein Magnet im Tiegelboden oder in der Tiegelwand bereitgestellt sein, um die Position des Gestells relativ zum Tiegelboden oder der Tüllwand zu sichern. Alternativ kann das Gestell auch über eine Halteeinrichtung an die Tiegelwand angebracht werden, wobei selbst eine Anbringung möglich ist, in der das Gestell mit einer Seitenfläche an einer Tiegelwand anliegt, einer Bodenfläche auf dem Tiegelboden aufliegt und so über den Garprozeßfühler auch der Füllstand an Garmedium in dem Garbehälter auswertbar ist. Erfindungswesentlich ist auf jeden Fall auch, daß der Garprozeßfühler in einer bestimmten Position innerhalb des Gestells fixiert ist, wobei hierzu beispielsweise zwei bis drei Ösen im Gestell bereitgestellt sind, die für einen festen Sitz des Garprozeßfühlers sorgen, und zwar derart, daß die Ösen an den Schaft des Garprozeßfühlers an definierten Stellen angreifen, an denen jedoch keine Meßstelle des Garprozeßfühlers vorliegt, um keine Meßergebnisse zu verfälschen. Das Gestell und die Ösen bilden dann zusammen eine erfindungsgemäße Positionierhilfe, die zudem die Halteeinrichtung zumindest teilweise umfassen kann.

Weitere Merkmale und Vorteile der Erfindung ergeben sich aus der nachfolgenden Beschreibung, in der ein Ausführungsbeispiel einer erfindungsgemäßen Positionierhilfe anhand der beiliegenden schematischen Zeichnungen beispielhaft beschrieben ist. Dabei zeigt:
- Figur 1: eine perspektivische Darstellung einer erfindungsgemäßen Positionierhilfe mit einem darin angeordneten Garprozeßfühler; und
- Figur 2: die Einheit aus Positionierhilfe und Garprozeßfühler gemäß Figur 1 in einem Tiegel.

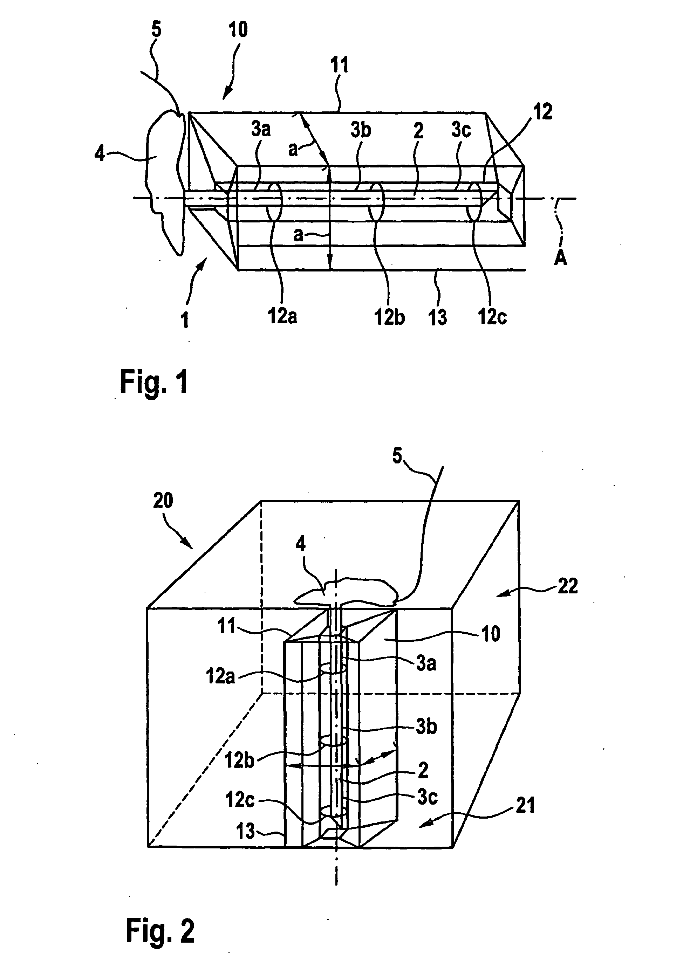

In Figur 1 ist ein Garprozeßfühler 1, wie er insbesondere aus der DE 199 45 021 C2 bekannt ist, mit einem Schaft 2, drei Meßstellen 3a, 3b, 3c längs des Schafts 2, einem Griff 4 und einem Kabel 5 innerhalb einer erfindungsgemäßen Positionierhilfe 10 dargestellt. Die Positionierhilfe 10 ist ihrerseits aus einem Gestell 11 und einer Fixiereinrichtung 12 aufgebaut. Das Gestell 11 ist dabei vorzugsweise ein Drahtgestell, das einen Außenquader mit Seiten gleicher Länge a senkrecht zu seiner Längsachse A und eine Verbindung zur Fixiereinrichtung 12 mit drei Ösen 12a, 12b, 12c bereitstellt. Die Ösen 12a, 12b, 12c sind zur Fixierung des Schafts 2 innerhalb der Positionierhilfe 10 konzentrisch zur Längsachse A des Gestells 11 angeordnet, so daß die Längsachse des Schafts 2 mit der Längsachse A des Gestells 11 zusammenfällt. Die Ösen 12a, 12b, 12c sorgen für einen festen Sitz des Schafts 2 innerhalb der Fixiereinrichtung 12 derart, daß zum Einen das freie Ende des Schafts 2 sich bis zur Bodenfläche des Gestells erstreckt und zum Anderen eine Beeinflussung der Meßstellen 3a, 3b, 3c über die Ösen 12a, 12b, 12c ausgeschlossen werden kann.

Die Positionierhilfe 10 gewährleistet, daß der Garprozeßfühler 1 wohl definiert in einen Tiegel (nicht dargestellt in Figur 1) einbringbar ist, wobei durch waagerechtes Auflegen der Positionierhilfe 10 beispielsweise auf einen Tiegelboden aufgrund der quaderförmigen Außenkontur derselben sichergestellt ist, daß jeder Meßpunkt 3a, 3b, 3c den gleichen Abstand vom Tiegelboden aufweist. Um sicherzustellen, daß die Positionierhilfe 10 im Tiegel im Wesentlichen nicht verschoben wird, kann das Gestell 11 zudem beschwert oder magnetisiert werden. Ist das Gestell 11 magnetisiert, so ist ein Magnet am Tiegelboden vorzusehen, der die Position der Positionierhilfe 10 im Tiegel sicherstellt.

Ist die Positionierhilfe 10 in einem Garkorb (nicht dargestellten) zu plazieren, so kann sie dort über einen Haken 13 positioniert werden. Der Haken 13 wird vom Gestell 11 selbst dargeboten, nämlich dadurch, daß das Gestell 11 an seiner Bodenseite nicht geschlossen ist.

Die Positionierhilfe 10 kann ferner derart in einen Tiegel 20 eingeführt werden, daß die Bodenfläche der quaderförmigen Positionierhilfe 10 auf einem Tiegelboden 21 aufliegt und eine Seitenfläche des Quaders der Positionierhilfe 10 an einer Tiegelwand 22 anliegt, wie in Figur 2 dargestellt. Zur Sicherung dieser senkrechten Position kann entweder wieder mit einem Magneten im Tiegel und einem magnetisierten oder magnetischen Material für das Gestell 11 gearbeitet werden, oder aber eine weitere, nicht dargestellte, Halteeinrichtung vorgesehen sein, die insbesondere an den Griff 4 des Garprozeßfühlers 1 angreift, um den Garprozeßfühler 1 derart in den Tiegel 20 zu drücken, so daß das freie Ende des Schafts 2 auf dem Tiegelboden 21 aufliegt, unter gleichzeitiger Anlage der Positionierhilfeflächen wie zuvor beschrieben.

Bei einer senkrechten Positionierung der Positionierhilfe 10 in dem Tiegel 20, wie sie in Figur 2 dargestellt ist, kann selbst der Füllstand des Tiegels 20 mit einem nicht dargestellten Garmedium erfaßt werden. In diesem Falle können also über die erfaßbaren Temperaturverläufe an den Meßstellen 3a, 3b, 3c und die zwischen den einzelnen Meßstellen 3a, 3b, 3c erfaßten Temperaturdifferenzen Rückschlüsse auf die Beschickungsmenge des Tiegels 20 sowie auch auf die Viskosität des Garmediums im Tiegel 20 gezogen werden.

Die erfindungsgemäße Positionierhilfe ermöglicht somit eine weitere Optimierung der Garprozeßführung unter Verwendung eines Garprozeßfühlers durch genaue Positionierung des letzteren bei Garung eines flüssigen oder viskosen Garmediums.

## Patentansprüche

1. Positionierhilfe (10) für einen Garprozeßfühler (1) mit einem zumindest eine Meßstelle (3a, 3b, 3c) darbietenden Schaft (2) und einem Griff (4), wobei der Schaft (2) des Garprozeßfühlers (1) zumindest teilweise derart in die Positionierhilfe (10) einführbar ist, daß die Längsachse des Schafts (2) mit der Längsachse (A) der Positionierhilfe (10) zusammenfällt und der Schaft (2) in der Positionierhilfe über eine erste Fixiereinrichtung (12) fixierbar ist, **dadurch gekennzeichnet, daß**
der Querschnitt der Positionierhilfe (10) über die gesamte Länge der Positionierhilfe (10) die Form eines regelmäßigen Vielecks aufweist.

2. Positionierhilfe nach Anspruch 1, **gekennzeichnet durch**
ein steifes Gestell (11), das vorzugsweise zumindest bereichsweise aus einem gut wärmeleitenden und/oder magnetischen oder magnetisierbaren und/oder schweren Material hergestellt oder mit solch einem Material verbunden ist.

3. Positionierhilfe nach Anspruch 1 oder 2, **dadurch gekennzeichnet, daß**
die erste Fixiereinrichtung (12) einen festen Sitz, insbesondere Preßsitz, des Schafts (2) des Garprozeßfühlers (1) in der Positionierhilfe (10), insbesondere in einer vorgegebenen Einstecktiefe, sicherstellt, vorzugsweise über eine Vielzahl von Stützringen oder Ösen (12a, 12b, 12c).

4. Positionierhilfe nach einem der vorangehenden Ansprüche, **gekennzeichnet durch**
eine erste Halteeinrichtung, vorzugsweise umfassend zumindest einen Haken (13) und/oder bereitgestellt **durch** das Gestell (11), zum Halten der Positionierhilfe (10) in einer festen Position relativ zu einem Garbehälter (20), insbesondere in Form eines Garkorbs, einer Garraumwand oder einer Tiegelwand (22).

5. Positionierhilfe nach einem der Ansprüche 2 bis 4, **dadurch gekennzeichnet, daß**
das Gestell (11) einen Außenquader darbietet, der konzentrisch zu seiner Längsachse (A) die Vielzahl von Stützringen oder Ösen (12a, 12b, 12c) trägt.

6. Positionierhilfe nach einem der Ansprüche 2 bis 5, **dadurch gekennzeichnet, daß**
das Gestell (11) eine Vielzahl von gerade verlaufenden Abschnitten, wie in Form von Stangen, umfaßt, von denen jeder entweder eine Außenkante der Positionierhilfe (10) definiert oder eine Verbindung zwischen der ersten Fixiereinrichtung (12) und einer besagten Außenkanten sicherstellt.

7. Positionierhilfe nach einem der vorangehenden Ansprüche, **dadurch gekennzeichnet, daß**
die erste Fixiereinrichtung (12) an den Schaft (2) bereichsweise angreift, ohne in Kontakt mit einer Meßstelle (3a, 3b, 3c) auf dem Schaft (2) zu kommen.

8. Positionierhilfe nach einem der Ansprüche 4 bis 7, **dadurch gekennzeichnet, daß**
die erste Halteeinrichtung (13) durch eine Öffnung in der Positionierhilfe (10) bereitgestellt ist, vorzugsweise durch ein freies Ende eines Abschnitts des Gestells (11), insbesondere eines eine Außenkante des Gestells (11) definierenden Abschnitts.

9. Positionierhilfe nach einem der vorangehenden Ansprüche, **gekennzeichnet durch**
eine zweite Halteeinrichtung, die vorzugsweise in einem mit der ersten Halteeinrichtung ausgeformt ist, zum Eingriff in eine dritte, mit einem Garbehälter, wie einem Garkorb, einer Garraumwand oder einer Tiegelwand in Verbindung stehenden Halteeinrichtung.

10. Dritte Halteeinrichtung zum Halten einer Positionierhilfe nach einem der vorangehenden Ansprüche an einem Garbehälter, wie einem Garkorb, einer Garraumwand oder einer Tiegelwand, **dadurch gekennzeichnet, daß**
sich die dritte Halteeinrichtung am oberen Rand eines Tiegels, insbesondere Innentiegels, abstützen kann, vorzugsweise auf den oberen Rand aufgesteckt oder angeklemmt werden kann.

11. Dritte Halteeinrichtung nach Anspruch 10, **gekennzeichnet durch**
zumindest ein erstes Federelement, über das der Garprozeßfühler auf den Boden des Tiegels, insbesondere Innentiegels, drückbar ist, wobei das erste Federelement vorzugsweise an den Schaft und/oder den Griff des Garprozeßfühlers angreift.

12. Dritte Halteeinrichtung nach Anspruch 10 oder 11, **gekennzeichnet durch**
zumindest eine zweite Fixiereinrichtung zum Fixieren der Position des Garprozeßfühlers und/oder der Positionierhilfe relativ zum Garbehälter, der Garraumwand oder der Tiegelwand, vorzugsweise derart, daß die Positionierhilfe mit einer ersten Fläche auf dem Tiegelboden und/oder einer zweiten Fläche an einer Tiegelwand anliegt und/oder das freie Ende des Schafts des Garprozeßfühlers auf dem Tiegelboden aufliegt, wobei die zweite Fixiereinrichtung vorzugsweise an den Griff des Garprozeßfühlers angreift.

## Claims

1. Positioning aid (10) for a cooking-process probe (1) having a shaft (2), which exhibits at least one measurement point (3a, 3b, 3c), and a handle (4), it being possible to insert the shaft (2) of the cooking-process probe (1) at least partially into the positioning aid (10) in such a way that the longitudinal axis of the shaft (2) coincides with the longitudinal axis (A) of the positioning aid (10) and the shaft (2) can be fixed in the positioning aid by means of a first fixing device (12), **characterized in that** the cross section of the positioning aid (10) has the form of a regular polygon over the entire length of the positioning aid (10).

2. Positioning aid according to Claim 1, **characterized by** a rigid frame (11) which is preferably produced, at least in regions, from a highly thermally conductive and/or magnetic or magnetized and/or heavy material or is connected to such a material.

3. Positioning aid according to Claim 1 or 2, **characterized in that** the first fixing device (12) ensures a firm fit, in particular a press-fit, of the shaft (2) of the cooking-process probe (1) in the positioning aid (10), in particular at a prespecified insertion depth, preferably by means of a large number of supporting rings or eyelets (12a, 12b, 12c).

4. Positioning aid according to one of the preceding claims, **characterized by** a first holding device, preferably comprising at least one hook (13) and/or provided by the frame (11), for holding the positioning aid (10) in a fixed position relative to a cooking container (20), in particular in the form of a cooking basket, a cooking chamber wall or a pot wall (22).

5. Positioning aid according to one of Claims 2 to 4, **characterized in that** the frame (11) exhibits an outer box which is fitted with the large number of supporting rings or eyelets (12a, 12b, 12c) concentrically in relation to its longitudinal axis (A).

6. Positioning aid according to one of Claims 2 to 5, **characterized in that** the frame (11) comprises a large number of straight sections, such as in the form of rods, each of which defines either an outer edge of the positioning aid (10) or ensures connection between the first fixing device (12) and a said outer edge.

7. Positioning aid according to one of the preceding claims, **characterized in that** the first fixing device (12) engages on the shaft (2) in regions, without coming into contact with a measurement point (3a, 3b, 3c) on the shaft (2).

8. Positioning aid according to one of Claims 4 to 7, **characterized in that** the first holding device (13) is provided by an opening in the positioning aid (10), preferably by a free end of a section of the frame (11), in particular a section which defines an outer edge of the frame (11).

9. Positioning aid according to one of the preceding claims, **characterized by** a second holding device, which is preferably integrally formed with the first holding device, for engaging in a third holding device which is connected to a cooking container, such as a cooking basket, a cooking chamber wall or a pot wall.

10. Third holding device for holding a positioning aid according to one of the preceding claims on a cooking container, such as a cooking basket, a cooking chamber wall or a pot wall, **characterized in that** the third holding device can be supported at the upper rim of a pot, in particular an internal pot, preferably can be clipped onto or clamped onto the upper rim.

11. Third holding device according to Claim 10, **characterized by** at least one first spring element by means of which the cooking-process probe can be pressed onto the base of the pot, in particular the internal pot, with the first spring element preferably engaging on the shaft and/or the handle of the cooking-process probe.

12. Third holding device according to Claim 10 or 11, **characterized by** at least one second fixing device for fixing the position of the cooking-process probe and/or of the positioning aid relative to the cooking container, the cooking-chamber wall or the pot wall, preferably in such a way that the positioning aid rests on the pot base by way of a first area and/or against a pot wall by way of a second area and/or the free end of the shaft of the cooking-process probe rests on the pot base, with the second fixing device preferably engaging on the handle of the cooking-process probe.

## Revendications

1. Dispositif (10) d'aide au positionnement d'une sonde de cuisson (1)) comportant une tige (2) offrant au moins un point de mesure (3a, 3b, 3c) et une poignée (4), la tige (2) de la sonde de cuisson (1) pouvant être introduite au moins partiellement dans le dispositif (10) d'aide au positionnement de sorte que l'axe longitudinal de la tige (2) coïncide avec l'axe longitudinal (A) du dispositif (10) d'aide au positionnement et la tige (2) puisse être immobilisée dans le dispositif d'aide au positionnement par l'intermédiaire d'un premier dispositif d'immobilisation (12), **caractérisé en ce que** la section transversale du dispositif (10) d'aide au positionnement présente, sur la totalité de la longueur du dispositif (10) d'aide au positionnement, la forme d'un polygone régulier.

2. Dispositif d'aide au positionnement selon la revendication 1, **caractérisé par**
un châssis rigide (11), qui est fabriqué de préférence au moins par endroit en un matériau conducteur de chaleur et/ou magnétique ou pouvant être magnétisé et/ou lourd ou est relié avec un tel matériau.

3. Dispositif d'aide au positionnement selon la revendication 1 ou 2, **caractérisé en ce que**
le premier dispositif d'immobilisation (12) assure un ajustement fixe, en particulier un ajustement serré, de la tige (2) de la sonde de cuisson (1) dans le dispositif (10) d'aide au positionnement, en particulier à une profondeur d'enfoncement spécifiée, de préférence par l'intermédiaire d'une pluralité de bagues d'appui ou d'oeillets (12a, 12b, 12c).

4. Dispositif d'aide au positionnement selon l'une quelconque des revendications précédentes, **caractérisé par**
un premier dispositif de maintien, comportant de préférence au moins un crochet (13) et/ou fourni par le châssis (11), pour le maintien du dispositif (10) d'aide au positionnement dans une position fixe par rapport à un récipient de cuisson (20), en particulier sous la forme d'un panier de cuisson, d'une paroi de compartiment de cuisson ou d'une paroi de casserole (22).

5. Dispositif d'aide au positionnement selon l'une quelconque des revendications 2 à 4, **caractérisé en ce que**
le châssis (11) présente un parallélépipède rectangle extérieur, qui supporte, de manière concentrique par rapport à son axe longitudinal (A), la pluralité de bagues d'appui ou d'oeillets (12a, 12b, 12c).

6. Dispositif d'aide au positionnement selon l'une quelconque des revendications 2 à 5, **caractérisé en ce que**
le châssis (11) comporte une pluralité de sections s'étendant en ligne droite, comme sous la forme de barreaux, parmi lesquelles chacune définit un bord extérieur du dispositif (10) d'aide au positionnement ou assure une liaison entre le premier dispositif d'immobilisation (12) et un desdits bords extérieurs.

7. Dispositif d'aide au positionnement selon l'une quelconque des revendications précédentes, **caractérisé en ce que**
le premier dispositif d'immobilisation (12) agit par endroit sur la tige (2), sans entrer en contact sur la tige (2) avec un point de mesure (3a, 3b, 3c).

8. Dispositif d'aide au positionnement selon l'une quelconque des revendications 4 à 7, **caractérisé en ce que** le premier dispositif de maintien (13) est fourni par une ouverture dans le dispositif (10) d'aide au positionnement, de préférence par une extrémité libre d'une section du châssis (11), en particulier une section définissant un bord extérieur du châssis (11).

9. Dispositif d'aide au positionnement selon l'une quelconque des revendications précédentes, **caractérisé par**
un deuxième dispositif de maintien, qui ne fait de préférence qu'un avec le premier dispositif de maintien, pour une mise en prise dans un troisième dispositif de maintien en liaison avec un récipient de cuisson, comme un panier de cuisson, une paroi de compartiment de cuisson ou une paroi de casserole.

10. Troisième dispositif de maintien pour le maintien d'un dispositif d'aide au positionnement selon l'une quelconque des revendications précédentes au niveau d'un récipient de cuisson, comme un panier de cuisson, une paroi de compartiment de cuisson ou une paroi de casserole, **caractérisé en ce que**
le troisième dispositif de maintien peut s'appuyer sur le bord extérieur d'une casserole, en particulier d'une casserole intérieure, et peut de préférence être emboîté sur ou connecté au bord supérieur.

11. Troisième dispositif de maintien selon la revendication 10, **caractérisé par**
au moins un premier élément formant ressort, par l'intermédiaire duquel la sonde de cuisson peut être pressée sur le fond de la casserole, en particulier de la casserole intérieure, le premier élément formant ressort agissant de préférence au niveau de la tige et/ou de la poignée de la sonde de cuisson.

12. Troisième dispositif de maintien selon la revendication 10 ou 11, **caractérisé par**
au moins un second dispositif d'immobilisation pour l'immobilisation de la position de la sonde de cuisson et/ou du dispositif d'aide au positionnement par rapport au récipient de cuisson, à la paroi de compartiment de cuisson ou à la paroi de casserole, de préférence de sorte que le dispositif d'aide au positionnement s'ajuste au fond de casserole par une première surface et/ou à une paroi de casserole par une deuxième surface et/ou l'extrémité libre de la tige de la sonde de cuisson appuie sur le fond de casserole, le second dispositif d'immobilisation agissant de préférence au niveau de la poignée de la sonde de cuisson.
